# EUROPÄISCHE PATENTANMELDUNG

(11) **EP 0 579 061 A1**
(43) Veröffentlichungstag der Anmeldung: **19.01.1994**
(21) Anmeldenummer: 93110622.3
(22) Anmeldetag: 02.07.1993
(51) Int. Cl.: F01K 23/10

(54) **Verfahren zum Betreiben einer Gas- und Dampfturbinenanlage sowie danach arbeitende GuD-Anlage**

(30) Priorität: 15.07.1992 DE 4223281
(71) Anmelder: SIEMENS AKTIENGESELLSCHAFT, D-80333 München (DE)
(72) Erfinder: Sigling, Ralf, Dipl.-Ing., D-91083 Baiersdorf (DE); Spinner, Ralf, Dipl.-Ing., D-91097 Oberreichenbach (DE)

(57) **Zusammenfassung**

Bei einer Gas- und Dampfturbinenanlage (1a, 1b) mit einem der Gasturbine (2) über einen Rauchgaskanal (9) nachgeschalteten Dampferzeuger (15) wird die im entspannten Rauchgas (RG) der Gasturbine (2) enthaltene Wärme zur Erzeugung von Dampf für die Dampfturbine (10) genutzt. Zum Erreichen einer schonenden Betriebsweise wird erfindungsgemäß bei Eintreten eines kritischen Betriebszustands der Anlage (1a, 1b), insbesondere im Anfahr- oder Lastwechselbetrieb, die Temperatur (T) des entspannten Rauchgases (RG) durch Einbringen von Wasser (W) in das entspannte Rauchgas (RG) verringert. Dazu umfaßt die Anlage (1a, 1b) vorzugsweise eine im Rauchgaskanal (9) angeordnete Eindüsvorrichtung (60), die mit einem Wasserreservoir (12, 94; 96), vorzugsweise mit dem Wasser-Dampf-Kreislauf (12) der Dampfturbine (10), verbunden ist.

## Beschreibung

Die Erfindung bezieht sich auf ein Verfahren zum Betreiben einer Gas- und Dampfturbinenanlage, bei dem die im entspannten Rauchgas der Gasturbine enthaltene Wärme zur Erzeugung von Dampf für die Dampfturbine genutzt wird. Sie richtet sich weiter auf eine nach diesem Verfahren betriebene Gas- und Dampfturbinenanlage.

Bei einer Gas- und Dampfturbinenanlage wird die im entspannten Rauchgas der Gasturbine enthaltene Wärme zur Erzeugung von Dampf für die Dampfturbine genutzt. Die Wärmeübertragung erfolgt in einem der Gasturbine nachgeschalteten Dampferzeuger, in dem Heizflächen in Form von Rohren oder Rohrbündeln angeordnet und in den Wasser-Dampf-Kreislauf der Dampfturbine geschaltet sind. Der Wasser-Dampf-Kreislauf umfaßt üblicherweise zwei Druckstufen, wobei die Heizflächen jeder Druckstufe in einen Vorwärmer und einen Verdampfer sowie einen Überhitzer unterteilt sind. Eine derartige GuD-Anlage ist z.B. aus der Europäischen Patentschrift 0 148 973 bekannt.

Bei einer hohen Temperatur des in den Dampferzeuger eintretenden entspannten Rauchgases und bei einer großen, im Wasser-Dampf-Kreislauf verfügbaren Gesamtwassermenge werden besonders niedrige Temperaturen des den Dampferzeuger verlassenden Rauchgases erreicht. Dies bedeutet, daß im Volllastbetrieb der Wirkungsgrad der Anlage besonders hoch ist. Daher sind üblicherweise die mit dem entspannten Rauchgas beaufschlagten Anlagenteile, d.h. der Dampferzeuger oder Abhitzekessel und dessen Einbauten, für Vollast- oder Nennlastbetrieb ausgelegt.

Beim Betrieb einer derartigen Anlage ist allerdings bei verschiedenen Betriebszuständen die in den Dampferzeuger eingebrachte Wärmemenge unterschiedlich. Dabei treten häufig kritische Betriebszustände infolge des unterschiedlichen dynamischen Verhaltens der Anlagenkomponenten, d.h. aufgrund der vergleichsweise großen Verzögerungs- oder Reaktionszeiten der Dampfturbinenanlage gegenüber der Gasturbinenanlage, auf. So treten z.B. im Anfahr- oder Lastwechselbetrieb, insbesondere bei sogenannten Schnellstarts oder raschen Laständerungen, große Temperaturgradienten und/oder zeitliche Änderungen der Temperatur sowie sprunghafte Änderungen des Massenstroms des entspannten Rauchgases auf. Diese Änderungen können bei Überschreiten bestimmter Maximalwerte im Laufe der Zeit zu Schäden oder zu einer Verringerung der Lebensdauer der Anlagenteile führen. Der Dampferzeuger kann also durch einen solchen Betrieb gefährdet sein.

Daher wird üblicherweise die Gasturbinenanlage im Anfahr- und Lastwechselbetrieb gedrosselt. Dies geschieht im allgemeinen dadurch, daß die der Gasturbinenbrennkammer pro Zeiteinheit zugeführte Brennstoffmenge in Abhängigkeit von den jeweils zulässigen Temperaturänderungen des entspannten Rauchgases gesteuert wird. Im Extremfall wird das entspannte Rauchgas über einen Bypasskamin vor dem Dampferzeuger abgeleitet. Für eine Gas- und Dampfturbinenanlage bedeutet dies eine Einschränkung der Anlagenverfügbarkeit.

Bei einer Gas- und Dampfturbinenanlage ohne Bypasskamin tritt ein kritischer Betriebszustand insbesondere dann auf, wenn die Anlage im sogenannten Simple-cycle-Betrieb arbeitet. Bei diesem Betriebszustand wird nur die Gasturbine zur Stromerzeugung genutzt. Der im Dampferzeuger produzierte Dampf muß dann ohne Energieumsatz in der Dampfturbine direkt in den Wasser-Dampf-Kreislauf geleitet werden. Die weitere Dampfproduktion im Dampferzeuger ist zur Vermeidung einer Austrocknung der Wärmetauscherrohre infolge unzulässig hoher Temperaturen an den Heizflächen erforderlich.

Obwohl Schäden durch den Einsatz spezieller, hochwertiger und damit kostenaufwendiger Werkstoffe für die betreffenden Anlagenteile gering gehalten werden können, sind bisher die Möglichkeiten eines Schnellstarts oder einer raschen Laständerung der Gasturbine infolge der dabei auftretenden hohen thermischen Belastung der Anlagenteile äußerst eingeschränkt. Katalysatoren zur Rauchgasreinigung können bei dieser Betriebsweise nicht eingesetzt werden.

Der Erfindung liegt daher die Aufgabe zugrunde, ein Verfahren zum Betreiben einer Gas- und Dampfturbinenanlage sowie eine derartige Anlage derart auszubilden, daß bei allen Betriebszuständen, also auch im Anfahr- oder Lastwechselbetrieb, wenn ein kritischer Betriebszustand eintritt, eine möglichst schonende Betriebsweise bei gleichzeitig hohem Gesamtwirkungsgrad erreicht wird.

Bezüglich des Verfahrens wird diese Aufgabe erfindungsgemäß dadurch gelöst, daß bei Erreichen eines kritischen Betriebszustands der Gas- und Dampfturbinenanlage die Temperatur des entspannten Rauchgases durch Einbringen von Wasser in das entspannte Rauchgas verringert wird.

Zur Bildung einer Stellgröße für die zuzuführende Wassermenge pro Zeiteinheit kann die Temperatur oder eine Temperaturänderung des entspannten Rauchgases erfaßt werden. Vorteilhafterweise wird das Wasser in Abhängigkeit von einer weg- und/oder zeitabhängigen Änderung der Rauchgastemperatur zugeführt.

Um eine Taupunkt-Unterschreitung des entspannten Rauchgases zu vermeiden, kann in Weiterbildung des Verfahrens das Wasser derart zugeführt werden, daß die Temperatur des Rauchgases bei Austritt aus dem der Gasturbine nachgeschdlteten Dampferzeuger einen vorgegebenen Minimalwert nicht unterschreitet. Für eine entsprechende Regelung oder Steuerung kann als Eingangsgröße dieser Minimalwert vorgegeben werden; daneben können auch der Schwefelgehalt des Brennstoffs und das Verhältnis von Brennstoff zu Luft bei der Verbrennung in der Brennkammer der Gasturbine sowie die Rauchgasfeuchte erfaßt werden.

Das in das Rauchgas eingebrachte Wasser wird zweckmäßigerweise dem Wasser-Dampf-Kreislauf der Dampfturbine entnommen. Alternativ kann das Wasser aber auch aus einer Wasseraufschaltung oder Wasserversorgung für die Brennkammer der Gasturbine abgezweigt werden. In dieser Wasserversorgung bereitgestelltes Wasser dient üblicherweise zur Verringerung der Stickoxidbildung bei der Verbrennung des Brennstoffs in der Brennkammer der Gasturbine.

Bezüglich der Gas- und Dampfturbinenanlage, die einen der Gasturbine über einen Rauchgaskanal nachgeschalteten Dampferzeuger zur Erzeugung von Dampf im Wasser-Dampf-Kreislauf der Dampfturbine umfaßt, wird die genannte Aufgabe erfindungsgemäß gelöst durch Mittel zum Einbringen von Wasser in den Rauchgaskanal.

Diese Mittel zum Einbringen des Wassers können eine innerhalb des Rauchgaskanals angeordnete Eindüsvorrichtung umfassen, die mit einem Wasserreservoir verbunden ist.

In vorteilhafter Ausgestaltung kann die Eindüsvorrichtung mit mindestens einem in Abhängigkeit von der Rauchgastemperatur einstellbaren Stellglied verbunden sein.

Zur Erfassung einer weg- und/oder zeitabhängigen Temperaturänderung sind zweckmäßigerweise entlang des Rauchgasweges mindestens zwei Temperatursensoren vorgesehen. Beide Tempearatursensoren können vorteilhafterweise innerhalb des Rauchgaskanals, d.h. im Bereich zwischen der Gasturbine und dem Dampferzeuger, angeordnet sein. Ein weiterer Temperatursensor kann innerhalb des Dampferzeugers angeordnet sein. Ferner kann am Ausgang des Dampferzeugers ein Temperatursensor vorgesehen sein, der mit einer Einrichtung zur Überwachung eines Minimalwertes verbunden ist. Mit diesem Sensor soll sichergestellt werden, daß die Temperatur des Rauchgases bei Austritt aus dem Dampferzeuger nicht unter den Säuretaupunkt absinkt.

Die Eindüsvorrichtung umfaßt in vorteilhafter Ausgestaltung eine Anzahl von Düsen. Dabei kann ein Netz von Düsen zentral im Rauchgaskanal angeordnet sein. Alternativ können die Düsen bei entsprechender Dimensionierung peripher im Rauchgaskanal, z.B. an einer Rauchgaskanalwand oder an mehreren Wänden, angeordnet sein. Diese Alternative hat den Vorteil, daß die Düsen selbst geschützt sind und keine wesentlichen zusätzlichen Druckverluste im Rauchgaskanal hervorrufen.

Ausführungsbeispiele der Erfindung werden anhand einer Zeichnung erläutert. Sie zeigt schematisch eine Gas- und Dampfturbinenanlage mit einer Eindüsvorrichtung für Wasser in einem Rauchgaskanal.

Die gezeigte Gas- und Dampfturbinenanlage umfaßt eine Gasturbinenanlage 1a und eine Dampfturbinenanlage 1b. Die Gasturbinenanlage 1a umfaßt eine Gasturbine 2 mit angekoppeltem Luftverdichter 3 und Generator 4 sowie eine der Gasturbine 2 vorgeschaltete Brennkammer 5, die an eine Frischluftleitung 6 des Luftverdichters 3 angeschlossen ist. Die Rauchgasleitung ist mit 8, der Rauchgaskanal der Gasturbine 2 ist mit 9 bezeichnet.

Die Dampfturbinenanlage 1b umfaßt eine Dampfturbine 10 mit angekoppeltem Generator 11 und in einem Wasser-Dampf-Kreislauf 12 einen der Dampfturbine 10 nachgeschalteten Kondensator 13 sowie einen dem Kondensator 13 nachgeschalteten Speisewasserbehälter 14 und einen Dampferzeuger 15.

Zum Zuführen des entspannten Rauchgases oder Abgases RG aus der Gasturbine 2 in den Dampferzeuger 15 ist der Rauchgaskanal 9 an einen Eingang 15a des Dampferzeugers 15 angeschlossen. Das entspannte Rauchgas RG verläßt den Dampferzeuger 15 über dessen Ausgang 15b in Richtung auf einen (nicht dargestellten) Kamin.

Der Dampferzeuger 15 umfaßt als Heizflächen einen Kondensatvorwärmer 20, einen Verdampfer 22 und einen Überhitzer 24 einer Niederdruckstufe sowie einen Economizer 26, einen Verdampfer 28 und einen Überhitzer 30 einer Hochdruckstufe. Die Überhitzer 24 und 30 sind mit dem Hochdruckteil 10a bzw. dem Niederdruckteil 10b der Dampfturbine 10 verbunden.

Der Vorwärmer 20 ist sowohl eingangsseitig über eine Leitung 32, in der eine Umwälzpumpe 34 und ein Ventil 36 liegen, als auch ausgangsseitig über eine Leitung 38, in die ein Ventil 40 geschaltet ist, an den Speisewasserbehälter 14 angeschlossen. Der Kondensator 13 ist über eine Leitung 42, in der eine Kondensatpumpe 44 liegt, ebenfalls an den Speisewasserbehälter 14 angeschlossen.

Ein Wasser-Dampf-Trennbehälter 46 der Niederdruckstufe, an den der Verdampfer 22 und der Überhitzer 24 angeschlossen sind, ist über eine Leitung 48, in der ein Ventil 50 und eine Niederdruck-Pumpe 52 liegen, ebenfalls ausgangsseitig an den Speisewasserbehälter 14 angeschlossen.

Der Economizer 26 der Hochdruckstufe ist eingangsseitig über eine Leitung 53, in der eine Hochdruck-Pumpe 54 und ein Ventil 56 liegen, mit dem Speisewasserbehälter 14 und ausgangsseitig mit einem Wasser-Dampf-Trennbehälter 58 verbunden. An den Wasser-Dampf-Trennbehälter 58 sind der Verdampfer 28 und der Überhitzer 30 der Hochdruckstufe angeschlossen.

Im Rauchgaskanal 9 ist eine Eindüsvorrichtung 60 angeordnet, die über eine Leitung 62 mit einem Stellglied 64 verbunden ist. Die stark vereinfacht dargestellte Eindüsvorrichtung 60 umfaßt eine Anzahl von Düsen 66, die zentral oder peripher im Rauchgaskanal 9 angeordnet sind. Die Düsen 66 können z.B. netzartig über den Querschnitt des Rauchgaskanals 9 verteilt angeordnet sein. Um Druckverluste innerhalb des Rauchgaskanals 9 zu vermeiden, können die Düsen 66 jedoch auch direkt an den Wänden des Rauchgaskanals 9 angeordnet sein.

Das Stellglied 64, z.B. ein Ventil, ist mit einer Regeleinrichtung oder Einrichtung zur Meßwertaufbereitung 68 verbunden. Die Einrichtung 68 ist eingangsseitig mit Temperatursensoren 70 bis 73 verbunden, die entlang des Rauchgaswegs verteilt angeordnet sind. Dabei sind die Sensoren 70 und 71 innerhalb des Rauchgaskanals 9 und der Sensor 72 ist innerhalb des Dampferzeugers 15 angeordnet. Der Sensor 73 liegt in der Nähe des Ausgangs 15b des Dampferzeugers 15.

Beim Betrieb der Gas- und Dampfturbinenanlage 1a, 1b wird der Brennkammer 5 Brennstoff B zugeführt. Der Brennstoff B wird in der Brennkammer 5 mit verdichteter Luft L aus dem Luftverdichter 3 verbrannt. Das bei der Verbrennung entstehende heiße Rauchgas RG' wird über die Rauchgasleitung 8 in die Gasturbine 2 geleitet. Dort entspannt es sich und treibt dabei die Gasturbine 2 an. Diese wiederum treibt den Luftverdichter 3 und den Generator 4 an. Dag aus der Gasturbine 2 austretende entspannte und noch heiße Rauchgas RG wird über den Rauchgaskanal 9 in den Dampferzeuger 15 eingeleitet und dort zur Erzeugung von Dampf für die Dampfturbine 10 genutzt.

Der aus dem Niederdruckteil 10b der Dampfturbine 10 austretende Dampf wird über eine Dampfleitung 80 dem Kondensator 13 zugeführt und dort kondensiert. Das Kondensat wird über die Pumpe 44 in den Speisewasserbehälter 14 gepumpt. Zur Vorwärmung des Speisewassers wird eine mittels der Ventile 36 und 40 einstellbare Teilmenge des Speisewassers über die Umwälzpumpe 34 und durch den Vorwärmer 20 in einer Schleife geführt.

Das vorgewärmte Speisewasser wird über die Niederdruck-Pumpe 52 in den Wasser-Dampf-Trennbehälter 46 der Niederdruckstufe sowie über die Hochdruck-Pumpe 54 und den Economizer 26 in den Wasser-Dampf-Trennbehälter 58 der Hochdruckstufe gefördert. Die jeweiligen Speisewassermengen pro Zeiteinheit werden mittels der Ventile 50 bzw. 56 eingestellt.

In der Niederdruckstufe wird das Speisewasser über eine Umwälzpumpe 82 durch den Verdampfer 22 und wieder zurück in den Wasser-Dampf-Trennbehälter 46 gepumpt. Der dabei erzeugte Dampf wird vom Wasser getrennt und im Überhitzer 24 überhitzt. Der überhitzte Dampf wird im Niederdruckteil 10b der Dampfturbine 10 entspannt und strömt über die Leitung 80 in den Kondensator 13.

In der Hochdruckstufe wird das unter hohem Druck stehende Speisewasser zunächst im Economizer 26 aufgeheizt und im Verdampfer 28, der über eine Umwälzpumpe 84 mit dem Wasser-Dampf-Trennbehälter 58 verbunden ist, verdampft. Der Dampf wird im Überhitzer 30 überhitzt und dem Hochdruckteil 10a der Dampfturbine 10 zugeführt. Der dort entspannte Dampf wird zusammen mit dem in der Niederdruckstufe erzeugten Dampf in den Niederdruckteil 10b der Dampfturbine 10 geleitet.

Die vom heißen, entspannten Rauchgas RG beaufschlagten Anlagenteile, d.h. die Wände des Dampferzeugers 15 und dessen Einbauten, insbesondere die Heizflächen 20 bis 30, sind üblicherweise zur Erzielung eines hohen Wirkungsgrades der Anlage für Vollastbetrieb ausgelegt. Bei Teillastbetrieb wird häufig zunächst die Leistung der Dasturbine 2 mit der Folge reduziert, daß die Temperatur T des entspannten Rauchgases RG sinkt. Dies wiederum hat eine Verminderung der erzeugten Dampfmenge und eine überproportionale Reduzierung der verfügbaren Gesamtwassermenge oder des Speisewasserstroms zur Folge. Bei einem erneuten Lastwechsel, aber auch beim Anfahren der Gasturbine, können infolge des raschen Anstiegs der Rauchgastemperatur T oder infolge großer Temperatur- und/oder Massenstromänderungen des entspannten Rauchgases RG bei gleichzeitig geringerer verfügbarer Speisewassermenge kritische Betriebszustände erreicht werden. Bei Eintreten eines solchen kritischen Betriebszustands wird die Temperatur T des entspannten Rauchgases RG durch Einbringen von Wasser W in das entspannte Rauchgas RG verringert.

Das Wasser W wird über die Leitung 62 der Eindüsvorrichtung 60 zugeführt und mittels der Düsen 66 in das Rauchgas RG, d.h. in den Rauchgasstrom, eingespritzt. Wie durch die gestrichelten Linien 100 und 101 angedeutet, kann die Wasserversorgung der Eindüsvorrichtung 60 aus verschiedenen Wasserreservoirs erfolgen. Zweckmäßigerweise wird das Wasser W dem Wasser-Dampf-Kreislauf 12 entnommen. Dazu ist an die Leitung 32 ein Zweig 90 mit einem Ventil 92 angeschlossen, das mit einem Behälter 94 verbunden ist. Der Behälter 94 dient auch als Wasserreservoir für den Wasser-Dampf-Kreislauf 12 der Dampfturbine 10. Alternativ kann aber auch Wasser W einer Wasseraufschaltung 96 für die Brennkammer 5 der Gasturbine 2 über ein Ventil 98 entnommen werden.

Zur Einstellung der pro Zeiteinheit in den Rauchgaskanal 9 einzubringenden Wassermenge wird dem Stellglied 64 eine in der Einrichtung 68 gebildete Stellgröße s aufgegeben. Dazu werden mittels der Temperatursensoren 70, 71, 72 der zeitliche Temperaturverlauf T und gegenbenenfalls die räumliche Temperaturverteilung Δ T des entspannten Rauchgases RG erfaßt. Außerdem wird die Temperatur T' des entspannten Rauchgases RG bei Austritt aus dem Dampferzeuger 15 mittels des Temperatursensors 73 gemessen. Diese Temperatur T' wird in der Einrichtung 68 mit einem vorgegebenen Minimal- oder Referenzwert Tₛ verglichen. Dadurch soll eine Unterschreitung der Rauchgastemperatur T' unterhalb des Säuretaupunktes vermieden werden. Hierzu dienen außerdem als weitere Eingangsgrößen der Einrichtung 68 der Schwefelgehalt S des Brennstoffs B, das Verhältnis BL von Brennstoff B zu Luft L bei der Verbrennung in der Brennkammer 5 und die Rauchgasfeuchte F.

Durch Einbringen von Wasser W in das entspannte Rauchgas RG bei Eintreten eines kritischen Betriebszustands wird das unterschiedliche dynamische Verhalten der Gasturbinenanlage gegenüber der Dampfturbinenanlage gewissermaßen ausgeglichen, so daß einerseits eine schonende Betriebsweise und andererseits eine hohe Anlagenverfügbarkeit erreicht werden.

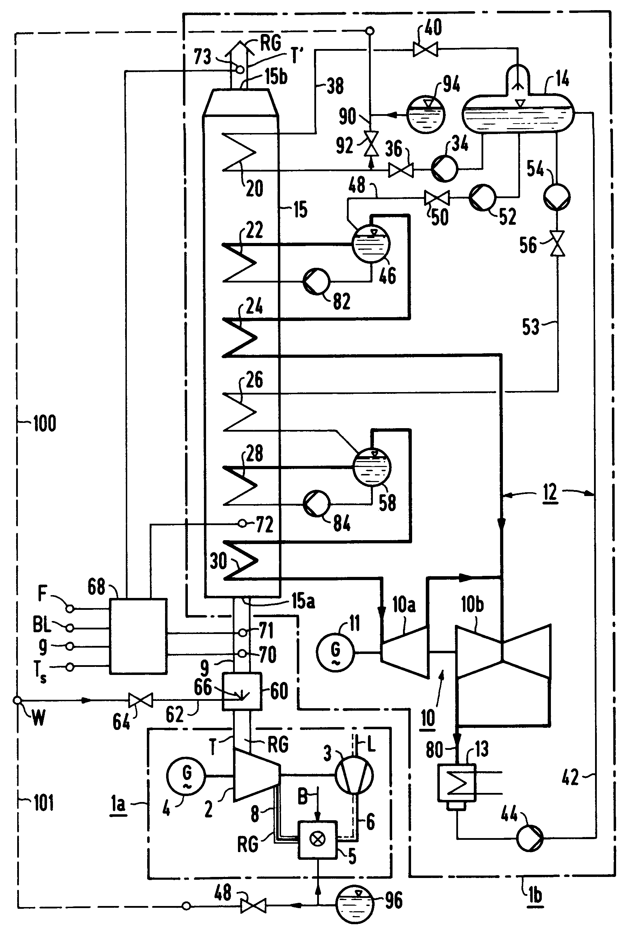

## Patentansprüche

1. Verfahren zum Betreiben einer Gas- und Dampfturbinenanlage, bei dem die im entspannten Rauchgas der Gasturbine enthaltene Wärme zur Erzeugung von Dampf für die Dampfturbine genutzt wird,
**dadurch gekennzeichnet,** daß bei Eintreten eines kritischen Betriebszustands die Temperatur (T) des entspannten Rauchgases (RG) durch Einbringen von Wasser (W) in das entspannte Rauchgas (RG) verringert wird.

2. Verfahren nach Anspruch 1,
**dadurch gekennzeichnet,** daß das Wasser (W) in Abhängigkeit von einer weg- und/oder zeitabhängigen Änderung der Rauchgastemperatur (T) zugeführt wird.

3. Verfahren nach Anspruch 1 oder 2,
**dadurch gekennzeichnet,** daß das Wasser (W) derart zugeführt wird, daß die Temperatur (T') des Rauchgases (RG) bei Austritt aus einem der Gasturbine (2) nachgeschalteten Dampferzeuger (15) einen vorgegebenen Minimalwert (Tₛ) nicht unterschreitet.

4. Verfahren nach einem der Ansprüche 1 bis 3,
**dadurch gekennzeichnet,** daß das in das Rauchgas (RG) eingebrachte Wasser (W) dem Wasser-Dampf-Kreislauf (12) der Dampfturbine (10) oder einer Wasseraufschaltung (96) für die Brennkammer (5) der Gasturbine (2) entnommen wird.

5. Gas- und Dampfturbinenanlage mit einem der Gasturbine (2) über einen Rauchgaskanal (9) nachgeschalteten Dampferzeuger (15) zur Erzeugung von Dampf in einem Wasser-Dampf-Kreislauf (12) der Dampfturbine (10), insbesondere zur Durchführung des Verfahrens nach einem der Ansprüche 1 bis 4,
**gekennzeichnet durch** Mittel (60, 66) zum Einbringen von Wasser (W) in den Rauchgaskanal (9).

6. Anlage nach Anspruch 5,
**dadurch gekennzeichnet,** daß die Mittel zum Einbringen des Wassers (W) eine im Rauchgaskanal (9) angeordnete Eindüsvorrichtung (60) umfassen, die mit einem Wasserreservoir (12, 94; 96) verbunden ist.

7. Anlage nach Anspruch 6,
**dadurch gekennzeichnet,** daß die Eindüsvorrichtung (60) mit mindestens einem in Abhängigkeit von der Rauchgastemperatur (T) einstellbaren Stellglied (64) verbunden ist.

8. Anlage nach einem der Ansprüche 5 bis 7,
**dadurch gekennzeichnet,** daß zur wegabhängigen Temperaturerfassung entlang des Rauchgasweges zwei Temperatursensoren (70, 71) vorgesehen sind.

9. Anlage nach einem der Ansprüche 5 bis 8,
**dadurch gekennzeichnet,** daß zur Überwachung der Rauchgastemperatur (T') am Ausgang (15b) des Dampferzeugers (15) ein Temperatursensor (73) vorgesehen ist, der mit einer Einrichtung (68) zur Überwachung eines Minimalwertes (Tₛ) verbunden ist.

10. Anlage nach einem der Ansprüche 6 bis 9,
**dadurch gekennzeichnet,** daß die Eindüsvorrichtung (60) eine Anzahl von Düsen (66) umfaßt, die zentral oder peripher im Rauchgaskanal (9) angeordnet sind.
